# EUROPÄISCHE PATENTSCHRIFT

(11) **EP 3 073 014 B1**
(45) Veröffentlichungstag und Bekanntmachung des Hinweises auf die Patenterteilung: **12.02.2020**
(21) Anmeldenummer: 16168065.7
(22) Anmeldetag: 01.03.2010
(51) Int. Cl.: E01C 23/088

(54) **AUSWERFEREINHEIT FÜR EINE STRASSENFRAESMASCHINE**
EJECTOR UNIT FOR A ROAD MILLING MACHINE
ÉJECTEUR POUR UNE FRAISEUSE ROUTIERE

(30) Priorität: 25.03.2009 DE 102009014729
(43) Veröffentlichungstag der Anmeldung: 28.09.2016
(62) Teilanmeldung aus: 10706617.7
(73) Patentinhaber: Wirtgen GmbH, 53578 Windhagen (DE)
(72) Erfinder: Buhr, Karsten, 56594 Willroth (DE); Lehnert, Thomas, 56587 Oberraderb (DE); Abresch, Stefan, 56369 Dierdorf (DE); Barimani, Cyrus, 53639 Königswinter (DE); Hähn, Günter, 53639 Königswinter (DE)
(74) Vertreter: Herrmann, Jochen

(56) Entgegenhaltungen:
- DE-A1- 2 316 406
- DE-A1- 3 911 947
- DE-C1- 3 708 520
- JP-A- H 083 919
- JP-U- H04 134 517
- US-A- 4 697 850

## Beschreibung

Die Erfindung betrifft eine Auswerfereinheit für eine Straßenfräsmaschine mit einem Auswerfer, der eine Förderfläche aufweist, und mit einem Träger.

Straßenfräsmaschinen weisen üblicher Weise ein Fräsrohr auf, auf dessen Oberfläche eine Vielzahl von Meißelhaltern befestigt sind. Dabei sind die Meißelhalter meist Teil eines Meißelhalterwechselsystems, das auch ein Basisteil umfasst. Das Basisteil ist auf der Oberfläche des Fräsrohrs angeschweißt und nimmt den Meißelhalter auswechselbar auf. Der Meißelhalter dient zur Befestigung eines Meißels, üblicherweise eines Rundschaftmeißels, wie er beispielsweise aus der DE 37 01 905 A1 bekannt ist. Die Meißelhalter sind derart auf der Oberfläche des Fräsrohrs angeordnet, dass sich spiralförmige Wendel ergeben. Die Wendeln gehen dabei vom Randbereich des Fräsrohrs aus und drehen sich zur Mitte des Fräsrohrs hin.

Damit treffen sich die Wendel, die von den gegenüberliegenden Randbereichen ausgehen, jeweils in der Mitte des Fräsrohrs. In diesem Bereich sind dann auch ein oder mehrere Auswerfer angeordnet. Die Wendeln fördern das von den Meißeln abgetragene Gut zu den Auswerfern. Die transportieren es dann aus dem Wirkungsbereich des Fräsrohrs ab.

Die Auswerfer unterliegen einem starken Verschleißangriff und müssen daher regelmäßig überprüft und ausgewechselt werden. Hierzu muss der auf dem Fräsrohr angeschweißte Auswerfer abgetrennt und ein neuer aufgeschweißt werden. Dabei ist auf die exakte Positionierung und Ausrichtung des Auswerfers zu achten, um eine ideale Ausförderleistung zu erreichen. Diese Tauscharbeit ist im beengten Arbeitsbereich des Fräsrohrs mühsam.

Aus DE 37 08 520 ist eine Fräswalze für eine Straßenfräsmaschine bekannt. Auf dem zylindrischen Walzenkörper der Fräswalze sind Halter abstehend aufgebracht. In diesen Haltern können Fräsmeißel auswechselbar aufgenommen werden. Die Halter sind dabei so angeordnet, dass sich auf dem Walzenkörper eine Räum- und Ladeschnecke bildet. Die Abstandsbereiche zwischen den Haltern sind mittels Metallplatten überdeckt.

Die JP H08 3919 A beschreibt einen Auswerfer, der an einem auf einer Fräswalze montierten Träger mittels Schraubverbindungen befestigt ist.

Es ist Aufgabe der Erfindung, einen verbesserten Auswerfer bereitzustellen, der eine einfache Maschinenwartung und sichere Befestigung zum Träger ermöglicht.

Diese Aufgabe wird mit einer Auswerfereinheit nach Anspruch 1 gelöst. Demgemäß ist der Auswerfer auswechselbar an einem Tragteil befestigbar. Auf diese Weise entsteht ein Werkzeugsystem bei dem der Auswerfer im Schadens- oder Verschleißfall einfach und schnell gewechselt werden kann. Damit ergibt sich eine deutliche Arbeitserleichterung und es lassen sich die Maschinenstillstandzeiten deutlich reduzieren.

Eine sichere Befestigung des Auswerfers am Tragteil ergibt sich dadurch, dass der Auswerfer wenigstens eine Schraubaufnahme aufweist, und dass der Auswerfer mittels einem oder mehreren Befestigungsschrauben mittelbar oder unmittellbar mit dem Träger verbunden ist.

Der Auswerfer ist mittels einer Befestigungsseite an einer Stützfläche des Trägers flächig abgestützt. Erfindungsgemäß ist vorgesehen, dass der Auswerfer einen Fixieransatz und/oder eine Fixieraufnahme aufweist und dass der Fixieransatz in eine Fixieraufnahme des Trägers eingreift und/oder ein Fixieransatz des Trägers in die Fixieraufnahme des Auswerfers eingreift. Mit der ineinanderzahnenden Verbindung von Fixieransatz und Fixieraufnahme wird eine formschlüssige Verbindung geschaffen, über die sich Bearbeitungskräfte belastungsoptimiert ableiten lassen. Dies wird insbesondere dann möglich, wenn vorgesehen ist, dass die formschlüssige Verbindung einen Versatz des Auswerfers gegenüber dem Träger quer zur Vorschubrichtung behindert oder blockiert.

Gemäß einer bevorzugten Ausgestaltungsvariante der Erfindung kann es vorgesehen sein, dass der Auswerfer in mindestens zwei verschiedenen Betriebsstellungen an dem Träger befestigbar ist.

Der Auswerfer kann in einer Betriebsstellung bis zur Erreichung der Verschleißgrenze genutzt werden. Dann wird der Auswerfer in die nächste Betriebsstellung gebracht und kann dann weitergenutzt werden. Auf diese Weise ergibt sich für den Auswerfer eine deutlich verlängerte Standzeit, als bei den üblichen Auswerfern.

Hierbei kann es vorgesehen sein, dass zum Wechsel der Betriebsstellungen der Auswerfer um 180° verdreht angebaut ist. Hierbei macht man sich die Erkenntnis zunutze, dass der Auswerfer im Wesentlichen an seinem dem Fräsrohr abgewandten Bereich verschleißt. Ist der Verschleißzustand dort erreicht, wird der Auswerfer demontiert und um 180° gedreht wieder angebaut. Die Auswerferstandzeit lässt sich dadurch deutlich verlängern, im Idealfall sogar verdoppeln. Um beim Wechsel der Betriebsstellungen des Auswerfers möglichst wenig Zeit zu verlieren und die Montage eindeutig zu gestalten, ist es gemäß der Erfindung vorgesehen, dass der Auswerfer und der Halter eine mechanische Schnittstelle bilden, die eine Montage des Auswerfers auf Umschlag ermöglicht.

Eine sichere Befestigung des Auswerfers am Tragteil ergibt sich bevorzugt dadurch, dass der Auswerfer eine Befestigungsaufnahme, nämlich einen Befestigungsansatz aufweist, und dass der Auswerfer mittels einem oder mehreren Befestigungsschrauben an dem Befestigungsansatz mittelbar oder unmittellbar mit dem Träger verbunden ist.

Bei der erfindungsgemäßen Auswerfereinheit kann es vorgesehen sein, dass der Träger einen Befestigungsfuß aufweist, an den ein Stützteil angeformt ist, und dass der Befestigungsfuß eine im Wesentlichen in Vorschubrichtung verlaufende Befestigungsfläche aufweist. Der Träger kann mittels der Befestigungsfläche lagerichtig auf dem Fräsrohr positioniert und daran befestigt, insbesondere angeschweißt, werden.

Der Träger lässt sich als kostengünstiges Bauteil einfach fertigen.

Wenn vorgesehen ist, dass der Befestigungsfuß in und/oder entgegen der Vorschubrichtung gegenüber dem Stützteil verbreitet ist, beispielsweise mit einem Vorsprung und/oder einem Ansatz, dann entsteht eine belastungsoptimierte Geometrie. Der Übergangsbereich zwischen dem Stützteil und dem Befestigungsfuß ist im Werkzeugeinsatz hohen Biegespannungen ausgesetzt. Die Verbreiterung verringert dort die Materialspannungen.

Gemäß einer bevorzugten Ausführungsvariante der Erfindung kann es vorgesehen sein, dass der Auswerfer eine Förderfläche aufweist, die im Wesentlichen quer zur Vorschubrichtung der Auswerfereinheit angeordnet ist und zumindest bereichsweise in Richtung entgegen der Werkzeugvorschubrichtung gemuldet, insbesondere schaufelartig eingetieft ausgebildet ist. Diese gemuldete Formgebung ermöglicht eine Geometrie, die die Ausförderrate verbessert.

Wenn vorgesehen ist, dass in die Förderfläche eine oder mehrere Vertiefungen eingebracht sind, dann kann sich während des Werkzeugeinsatzes abgetragenes Gut in den Vertiefungen ablagern. Es bildet dort eine "natürliche" Verschleißschutzschicht.

Gemäß einer Erfindungsvariante kann es vorgesehen sein, dass die wenigstens eine Schraubaufnahme der Frontseite des Auswerfers zugekehrt in eine Schraubenkopfaufnahme ausläuft, in der ein Schraubenkopf einer Befestigungsschraube zumindest bereichsweise unverdrehbar aufnehmbar ist. Mit den Schraubverbindungen ist ein schneller und problemloser Auswerfertausch möglich. Die versenkte oder teilversenkte Aufnahme des Schraubenkopfs verhindert einen abrasiven Angriff am versenkten Kopfbereich. Darüber hinaus wird ein Lösen der Schraube hier verhindert.

Wenn die Gestaltung des Auswerfers derart ist, dass auf der der Förderfläche abgewandten Rückseite eine oder mehrere angeformte Versteifungsrippen angeordnet sind, dann kann mit geringem Materialaufwand ein ausreichend steifer Auswerfer konstruiert werden.

Eine bevorzugte Erfindungsvariante ist dergestalt, dass die Befestigungsseite einen konvexen Befestigungsabschnitt zur Anlage an einem konkaven Aufnahmeabschnitt eines Trägers aufweist. Auf diese Weise ergibt sich zwischen dem Träger und dem Auswerfer eine Flächenverbindung, über die sich Bearbeitungskräfte auch bei unsymmetrischer Krafteinwirkung auf die Förderfläche sicher abtragen lassen.

Wenn vorgesehen ist, dass der Träger den Auswerfer derart hält, dass die Förderfläche gegenüber der Vorschubrichtung leicht geneigt verläuft, dann kann die Ausförderleistung optimiert werden. Es hat sich gezeigt, dass bei einer Neigungseinstellung im Winkelbereich von ± 20° eine besonders gute Leistung erreicht wird. Überraschender Weise ergibt sich ein Optimum bei negativem Neigungswinkel, nämlich bei einer Neigung um 5° bis 15° entgegen der Vorschubrichtung.

Eine zusätzliche Verbesserung der Auswerferstandzeit lässt sich dadurch erreichen, dass im Bereich der Förderfläche wenigstens ein Verschleißschutzelement angeordnet ist, das aus einem verschleißfesteren Material als die Förderfläche besteht, wobei insbesondere vorgesehen sein kann, dass das Verschleißschutzelement in einem Hartwerkstoffelement oder einer Auftragsschweißung gebildet ist.

Die Erfindung wird im Folgenden anhand eines in den Zeichnungen dargestellten Ausführungsbeispieles näher erläutert. Es zeigen:
- Figur 1: eine Fräswalze einer Straßenfräsmaschine in Frontansicht,
- Figur 2: die Fräswalze gemäß Figur 1 in Seitenansicht,
- Figur 3: die Ansicht gemäß Figur 2 vergrößert und in leicht veränderter Darstellung,
- Figur 4: eine Auswerfereinheit in perspektivischer Frontansicht,
- Figur 5: die Auswerfereinheit gemäß Figur 4 in perspektivischer Rückansicht,
- Figur 6: einen Träger der Auswerfereinheit gemäß Figur 5 in perspektivischer Rückansicht,
- Figur 7: den Träger gemäß Figur 6 in perspektivischer Ansicht,
- Figur 8: einen Auswerfer der Auswerfereinheit gemäß Figur 6 in perspektivischer Frontansicht,
- Figur 9: den Träger gemäß Figur 8 in perspektivischer Rückansicht,
- Figur 10: in perspektivischer Rückansicht eine nicht zur Erfindung gehörende Ausgestaltung einer Auswerfereinheit mit einem Auswerfer und einem Träger und
- Figur 11: die Anordnung gemäß Figur 10 in perspektivischer Frontansicht.

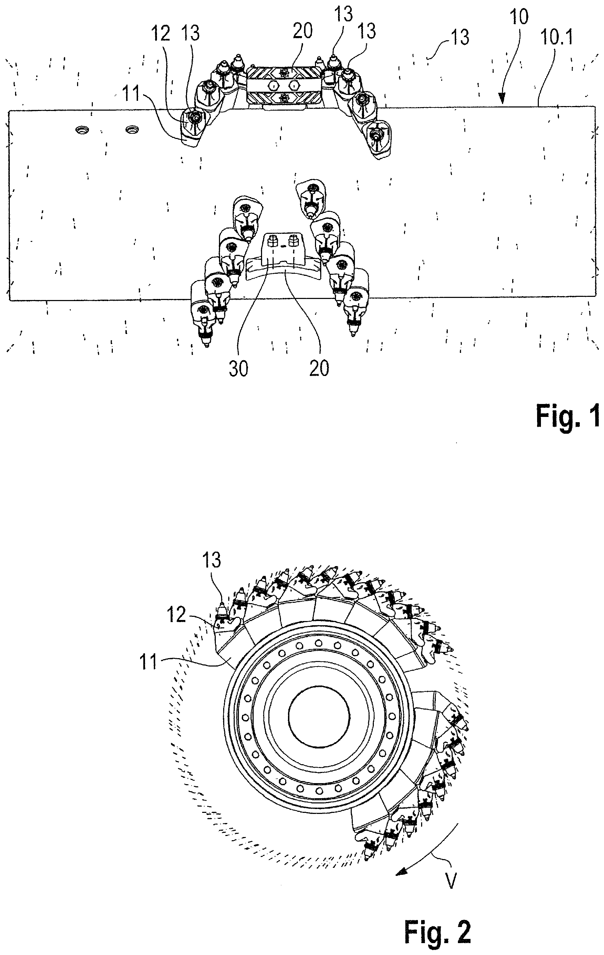

Figur 1 zeigt eine Fräswalze mit einem zylindrischen Fräsrohr 10, auf dessen Walzenoberfläche 10.1 eine Vielzahl von Basisteilen 11 von Meißelhalterwechselsystemen aufgeschweißt sind. Die Basisteile 11 tragen auswechselbare Meißelhalter 12. In den Meißelhaltern 12 ist jeweils ein Meißel 13, nämlich ein Rundschaftmeißel auswechselbar aufgenommen. Die Basisteile 11 sind einander so zugeordnet, dass sie eine Wendel, nämlich eine Transportwendel bilden. Dabei dreht sich die Wendel, ausgehend von der Seite des Fräsrohrs 10 auf der Walzenoberfläche 10.1 in Richtung auf die zwischen den beiden Seiten gebildete Fräsrohrmitte. In den Figuren 1 und 2 sind zur besseren Übersichtlichkeit nur ein Teil der Meißelhalterwechsel-Systeme dargestellt. Von den nicht gezeigten Meißelhalterwechsel-Systemen sind ersatzweise strichlierte Linien gezeigt, die die Mittellängsachse der Meißel 13 repräsentieren. Wie diese Linien erkennen lassen, stehen beidseitig der Fräsrohrmitte jeweils mehrere Transportwendeln.

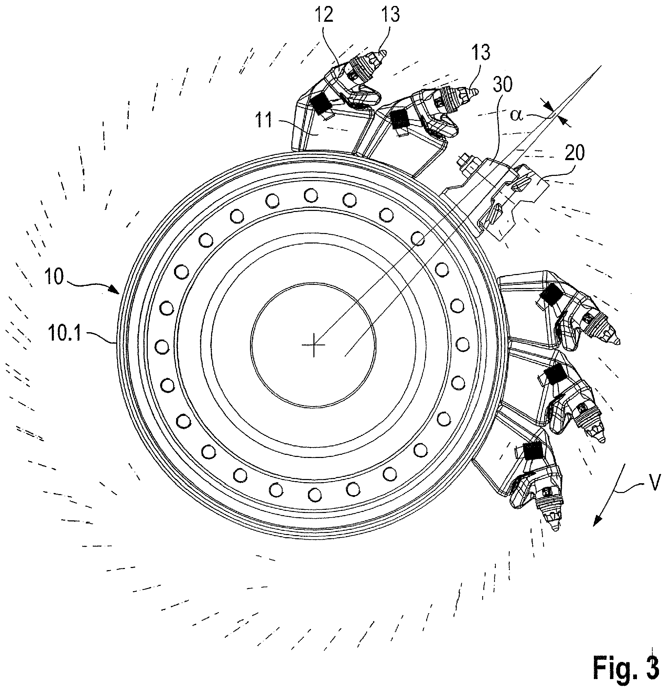

Die Transportwendeln treffen sich paarweise im Bereich der Fräsrohrmitte. Wie die Figur 1 erkennen lässt, ist dort jeweils mindestens eine Auswerfereinheit angeordnet. In der Figur 3 sind gegenüber der Darstellung gemäß Figur 2 die Meißelhalterwechsel-Systeme nicht gezeigt, die den Blick auf die Auswerfereinheit verstellen. Wie diese Darstellung erkennen lässt, wird die Auswerfereinheit von einem Tragteil 30 und einem Auswerfer 20 gebildet.

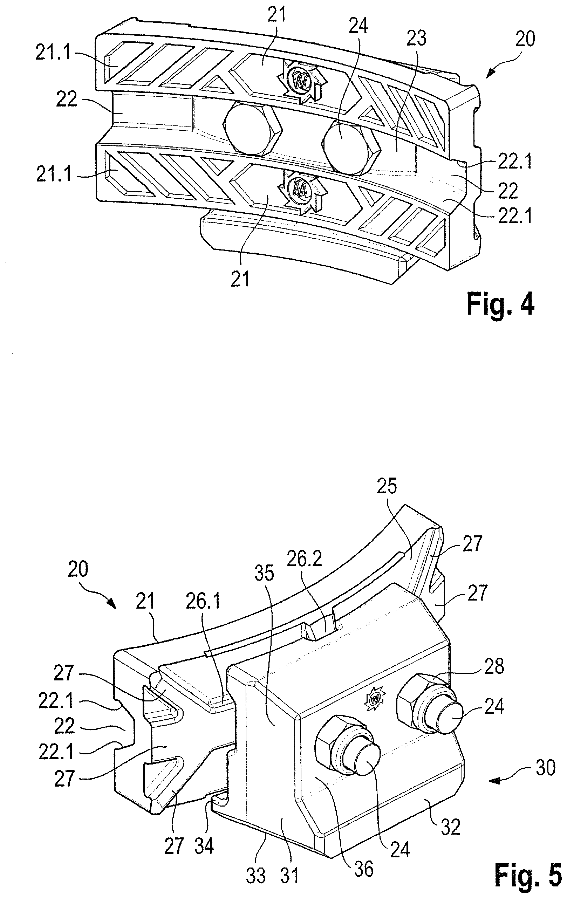

In den Figuren 4 und 5 ist die Auswerfereinheit in Alleindarstellung gezeigt.

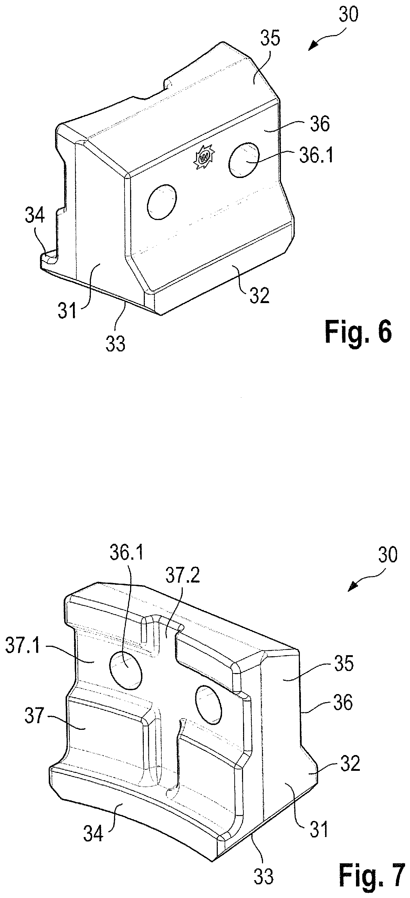

Unter Bezugnahme auf Figuren 6 und 7 wird zunächst die Konstruktion des Tragteils 30 erläutert. Es weist einen Befestigungsfuß 31 auf, der an seiner Unterseite eine Befestigungsfläche 33 bildet. Mit dieser kann das Tragteil 30 auf die Walzenoberfläche 10.1 aufgesetzt und seitlich verschweißt werden. An den Befestigungsfuß 31 ist nach oben abstehend ein Stützteil 35 angeformt, der eine Rückseite 36 bildet. Der Befestigungsfuß 31 ist mittels eines Ansatzes 32 über die Rückseite 36 verbreitert, so dass er eine breite Befestigungsfläche 33 mit großem Stützabstand bildet. Darüber hinaus bringt die durch den Ansatz 32 bewirkte Querschnittsverbreiterung eine Verstärkung des hoch belasteten Übergangsbereiches zwischen Befestigungsfuß 31 und Stützteil 35. Eine weitere Verbreiterung der Befestigungsfläche 33 wird mit einem frontseitigen Vorsprung 34 erreicht, der sich ebenso wie der Ansatz 32 über die gesamte Breite des Tragteils 30 erstreckt. Das Tragteil 30 weist frontseitig eine Stützfläche 37 auf, die sich über die Vorderseite des Stützteils 35 und auch über einen Teil des Befestigungsfußes 31 erstreckt. Diese Ausbildung der Stützfläche 37 ermöglicht eine festigkeitsoptimierte Abstützung des Auswerfers 20. In die Stützfläche 37 sind zwei Aufnahmen 37.1, 37.2 eingearbeitet. Die beiden Aufnahmen 37.1, 37.2 sind so in die Stützfläche 37 eingetieft, dass sie trogartige Mulden bilden.

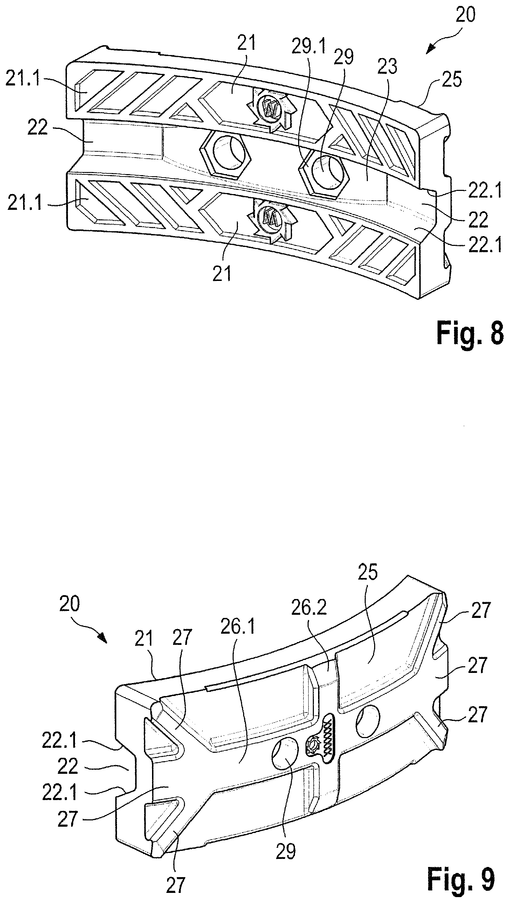

Mit Bezug auf die Figuren 8 und 9 wird nachfolgend der Auswerfer 20 erläutert. Er ist plattenförmig als Gesenk-Schmiedeteil ausgebildet und daher besonders steif. Der Auswerfer 20 weist eine frontseitige Förderfläche 21 auf.

Diese ist mit Eintiefungen 21.1, 22 versehen. Zwischen den Eintiefungen 21.1 stehen Rippen, die im Winkel zur Senkrechten stehen und somit in Richtung zur Auswerfermitte geneigt sind. Die Eintiefungen nehmen während des Betriebseinsatzes Abraummaterial auf, so dass sich ein "natürlicher" Verschleißschutz bildet. Eine besonders gute Förderrate wird zudem dadurch erreicht, dass die Förderfläche 21 konkav und damit schaufelartig ausgebildet ist. Die Eintiefung 22 weist zwei Schrägflächen 22.1 auf, die im Winkel zu der Förderfläche 21 stehen und die Förderwirkung unterstützen.

Zwischen den beiden Eintiefungen 22 steht ein verdickter Ansatz 23, der zwei als Durchgangsbohrungen ausgebildete Schraubaufnahmen 29 aufnimmt. Die Schraubaufnahmen 29 laufen frontseitig in sechseckige Schraubenkopfaufnahmen 29.1 aus.

Die Figur 9 zeigt die Rückseite des Auswerfers 20. Wie diese Darstellung erkennen lässt, stehen rückseitig rippenartige Fixieransätze 26.1, 26.2 vom Auswerfer 20 vor. Die Fixieransätze 26.1, 26.2 sind in ihrer Anordnung und Dimensionierung auf die Anordnung und Form der Aufnahmen 37.1, 37.2 des Trägers 30 angepasst. Die Schraubaufnahmen 29 sind durch den Fixieransatz 26.1 hindurchgeführt.

Wie Figur 9 weiter erkennen lässt, sind in den rückseitigen Eckbereichen des Auswerfers 20 Versteifungsrippen 27 angeordnet. Diese sind an den horizontalen Fixieransatz 26 angeschlossen, so dass sich eine optimale Kraftableitung ergibt.

Zur Befestigung des Auswerfers 20 wird dieser mit seiner Rückseite an die Stützfläche 37 des Trägers 30 angesetzt. Dabei greifen dann die Fixieransätze 26.1, 26.2 in die korrespondierenden Aufnahmen 37.1, 37.2 ein. Auf diese Weise ergibt sich eine kreuzweise Verzahnung, die eine Verschiebung des Auswerfers 20 gegenüber dem Träger 30 in Achs- und Radialrichtung des Fräsrohrs 10 verhindert. Über diese verzahnte Verbindung können große Teile der während des Werkzeugeinsatzes entstehenden Kräfte abgeleitet werden.

Die Schraubaufnahmen 29, 36.1 des Auswerfers 20 und des Trägers 30 stehen in Flucht, so dass Befestigungsschrauben 24 (siehe Figuren 4 und 5) durch sie hindurchgesteckt werden können. Der Schraubenkopf der Befestigungsschrauben 24 findet in der Schraubenkopfaufnahme 29.1 Platz, wo er unverdrehbar gehalten wird. Auf die Befestigungsschrauben 24 können, vorzugsweise selbst sichernde Muttern 28 aufgeschraubt und somit der Auswerfer 20 am Träger 30 fixiert werden.

Während des Werkzeugeinsatzes verschleißt vornehmlich der radial außenstehende Bereich des Auswerfers 20. Der Auswerfer 20 ist, wie die Figuren 8 und 9 erkennen lassen, symmetrisch zur Mittelquerebene ausgebildet. Bei Erreichen der Verschleißgrenze kann er daher abgebaut und um 180° gedreht wieder angebaut werden.

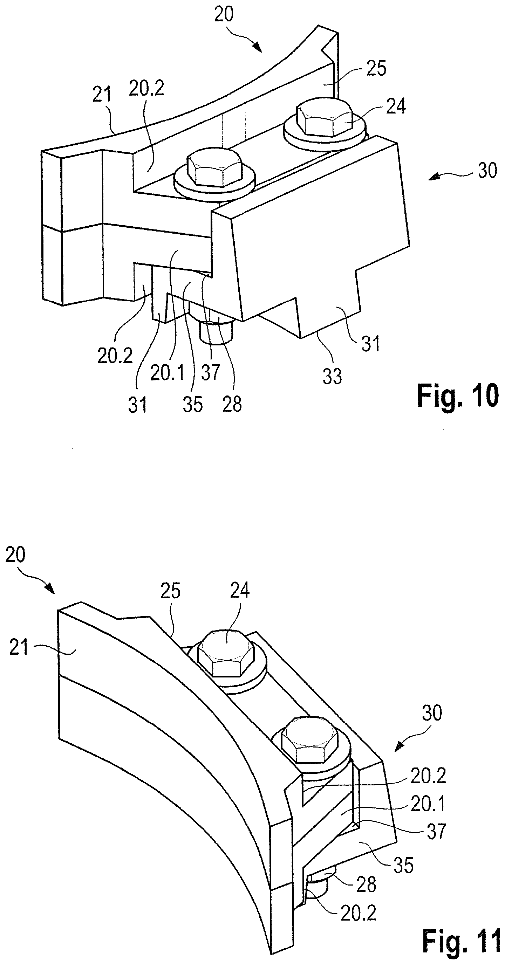

Figuren 10 und 11 zeigen eine weitere Ausgestaltungsvariante einer nicht zur Erfindung gehörende Auswerfereinheit. Diese umfasst wieder einen Auswerfer 20 und einen Träger 30. Der Auswerfer 20 besitzt wieder eine gemuldete Förderfläche 21, die in Bearbeitungsrichtung gewandt ist, wobei die Muldung konkav in Richtung entgegen der Bearbeitungsrichtung eingetieft ist. Der Förderfläche 21 abgewandt weist der Auswerfer 20 an seiner rückwärtigen Befestigungsseite 25 einen Befestigungsansatz 20.1 auf. Dieser steht blockartig entgegengesetzt der Bearbeitungsrichtung ab. Er besitzt zwei Schraubaufnahmen, die fluchtend zu Schraubaufnahmen des Trägers 30 angeordnet werden können.

Durch die Schraubaufnahmen lassen sich Befestigungsschrauben 24 hindurchführen und auf deren Schraubbolzen endseitig Muttern 28 aufdrehen. Damit wird der Auswerfer 20 fest mit einer Stützfläche 37 des Trägers 30 verspannt. Wie die Zeichnungen erkennen lassen, ist der Auswerfer 20 im Bereich der Befestigungsseite 25 mit Ausnehmungen 20.2 versehen. Die obere Ausnehmung 20.2 nimmt die Köpfe der Befestigungsschrauben 24 auf und schützt sie so hinter der Förderfläche 21 vor dem abrassiven Angriff des abgetragenen Materials. Die untere Ausnehmung 20.2 zieht sich schürzenartig über den Träger 30 und schützt diesen hier. Der Auswerfer 20 ist zur Mittelquerachse symmetrisch und kann daher um 180° gedreht auf Umschlag in zwei Betriebsstellungen an dem Träger 30 befestigt werden.

## Patentansprüche

1. Auswerfereinheit, für eine Straßenfräsmaschine mit einem Auswerfer (20) und einem Träger (30), wobei der Auswerfer eine Förderfläche (21) und eine Befestigungsseite (25) aufweist,
wobei der Auswerfer (20) auswechselbar an dem Träger (30) befestigbar ist, wobei der Auswerfer (20) mittels der Befestigungsseite (25) an einer Stützfläche (37) des Trägers (30) flächig abgestützt ist,
wobei der Auswerfer (20) wenigstens eine Schraubaufnahme (29) aufweist,
und wobei der Auswerfer (20) mittels einer oder mehrerer Befestigungsschraube (24) mittelbar oder unmittelbar mit dem Träger (30) verbunden ist,
**dadurch gekennzeichnet,**
**dass** der Auswerfer (20) einen Fixieransatz (26.1, 26.2) und/oder eine Fixieraufnahme aufweist,
und **dass** der Fixieransatz (26.1, 26.2) in eine Fixieraufnahme (37.1, 37.2) des Trägers (30) eingreift und/oder ein Fixieransatz des Trägers (30) in die Fixieraufnahme des Auswerfers (20) eingreift.

2. Auswerfereinheit nach Anspruch 1,
**dadurch gekennzeichnet,**
**dass** der Auswerfer (20) in mindestens zwei verschiedenen Betriebsstellungen an dem Träger (30) befestigbar ist.

3. Auswerfereinheit nach Anspruch 2,
**dadurch gekennzeichnet,**
**dass** zum Wechsel der Betriebsstellungen der Auswerfer (20) um 180° verdreht anbaubar ist.

4. Auswerfereinheit gemäß Anspruch 2 oder 3,
**dadurch gekennzeichnet,**
**dass** der Auswerfer (20) und der Halter (30) eine mechanische Schnittstelle bilden, die eine Montage des Auswerfers (20) auf Umschlag ermöglicht.

5. Auswerfereinheit nach einem der Ansprüche 1 bis 4,
**dadurch gekennzeichnet,**
**dass** der Auswerfer (20) eine Befestigungsaufnahme, nämlich einen Befestigungsansatz (20.1) aufweist,
und **dass** der Auswerfer (20) mittels einem oder mehreren Befestigungselementen, beispielsweise Befestigungsschrauben (24), an dem Befestigungsansatz (20.1) mittelbar oder unmittellbar mit dem Träger (30) verbunden ist.

6. Auswerfereinheit nach einem der Ansprüche 1 bis 5,
**dadurch gekennzeichnet,**
**dass** der Träger (30) einen Befestigungsfuß (31) aufweist, an den ein Stützteil (35) angeformt ist,
und **dass** der Befestigungsfuß (31) eine im Wesentlichen in Vorschubrichtung (V) verlaufende Befestigungsfläche (33) aufweist.

7. Auswerfereinheit nach Anspruch 6,
**dadurch gekennzeichnet,**
**dass** der Befestigungsfuß (31) in und/oder entgegen der Vorschubrichtung (V) gegenüber dem Stützteil (35) verbreitet ist.

8. Auswerfereinheit nach einem der Ansprüche 1 bis 7,
**dadurch gekennzeichnet,**
**dass** die Förderfläche (21) des Auswerfers (20) im Wesentlichen quer zur Vorschubrichtung (V) der Auswerfereinheit angeordnet ist und zumindest bereichsweise in Richtung entgegen der Werkzeugvorschubrichtung gemuldet, insbesondere schaufelartig eingetieft ausgebildet ist.

9. Auswerfereinheit nach Anspruch 8,
**dadurch gekennzeichnet,**
**dass** die Förderfläche (21) zumindest bereichsweise konkav ausgebildet ist oder sie sich im gemuldeten Bereich aus Linear- und/oder Bogenabschnitten zusammensetzt.

10. Auswerfereinheit nach einem der Ansprüche 1 bis 9,
**dadurch gekennzeichnet,**
**dass** in die Förderfläche (21) eine oder mehrere Vertiefungen (21.1, 22) eingebracht sind.

11. Auswerfereinheit nach einem der Ansprüche 1 bis 10,
**dadurch gekennzeichnet,**
**dass** die wenigstens eine Schraubaufnahme (29) der Frontseite des Auswerfers (20) zugekehrt in eine Schraubenkopfaufnahme (29.1) ausläuft, in der ein Schraubenkopf der Befestigungsschraube (24) zumindest bereichsweise unverdrehbar aufnehmbar ist.

12. Auswerfereinheit nach einem der Ansprüche 1 bis 11,
**dadurch gekennzeichnet,**
**dass** auf der der Förderfläche (21) abgewandten Rückseite eine oder mehrere angeformte Versteifungsrippen (27) angeordnet sind.

13. Auswerfereinheit nach einem der Ansprüche 1 bis 12,
**dadurch gekennzeichnet,**
**dass** die Befestigungsseite (25) einen konvexen Befestigungsabschnitt zur Anlage an einem konkaven Aufnahmeabschnitt eines Trägers (30) aufweist.

14. Auswerfereinheit nach einem der Ansprüche 1 bis 13,
**dadurch gekennzeichnet,**
**dass** im Bereich der Förderfläche (21) wenigstens ein Verschleißschutzelement angeordnet ist, das aus einem verschleißfesteren Material als die Förderfläche (21) besteht.

15. Auswerfereinheit nach Anspruch 14,
**dadurch gekennzeichnet,**
**dass** das Verschleißschutzelement aus einem Hartwerkstoffelement oder einer Auftragsschweißung gebildet ist.

16. Auswerfereinheit nach einem der Ansprüche 1 bis 15,
**dadurch gekennzeichnet,**
**dass** der Träger (30) den Auswerfer (20) derart hält, dass die Förderfläche (21) gegenüber der Bearbeitungsrichtung insbesondere um einen Winkel (α) von ± 20° um deren Radialausrichtung geneigt ist.

17. Auswerfereinheit nach Anspruch 16,
**dadurch gekennzeichnet,**
**dass** der Winkel (α) negativ entgegen der Bearbeitungsrichtung im Winkelbereich von - 5° bis - 20° verläuft.

## Claims

1. An ejector unit for a road milling machine having an ejector (20) and a carrier (30), the ejector having a conveyor surface (21) and a fastening side (25),
the ejector (20) being fastenable in an exchangeable manner to the carrier (30), the ejector (20) being supported on a surface against a support surface (37) of the carrier (30) by means of the fastening side (25),
the ejector (20) having at least one screw receptacle (29),
and the ejector (20) being connected directly or indirectly to the carrier (30) by means of one or more fastening screws (24),
**characterised in that**,
the ejector (20) has a fixing lug (26.1, 26.2) and/or a fixing receptacle,
and that the fixing lug (26.1, 26.2) engages in a fixing receptacle (37.1, 37.2) of the carrier (30) and/or a fixing lug of the carrier (30) engages in the fixing receptacle of the ejector (20).

2. The ejector unit according to claim 1,
**characterised in that**,
the ejector (20) can be fastened to the carrier (30) in at least two different operating positions.

3. The ejector unit according to claim 2,
**characterised in that**,
for changing the operating positions the ejector (20) can be attached such that same is rotated by 180°.

4. The ejector unit according to claim 2 or 3,
**characterised in that**,
the ejector (20) and the holder (30) form a mechanical interface which enables the ejector (20) to be mounted on envelope.

5. The ejector unit according to any one of claims 1 through 4,
**characterised in that**,
the ejector (20) has a fastening receptacle, specifically a fastening lug (20.1),
and that the ejector (20), is connected indirectly or directly to the carrier (30) on the fastening lug (20.1) by means of one or more fastening elements, such as fastening screws (24).

6. The ejector unit according to any one of claims 1 through 5,
**characterised in that**,
the carrier (30) has a fastening base (31), on which a support part (35) is integrally formed, and that the fastening base (31) has a fastening surface (33) extending substantially in the advancing direction (V).

7. The ejector unit according to claim 6,
**characterised in that**,
the fastening base (31) expands in and/or counter to the advancing direction (V) relative to the support part (35).

8. The ejector unit according to any one of claims 1 through 7,
**characterised in that**,
the conveyor surface (21) of the ejector (20) is arranged substantially transverse to the advancing direction (V) of the ejector unit and is designed to be troughed, particularly recessed in a shovel-like manner, at least in regions in the opposite direction to the tool advancing direction.

9. The ejector unit according to claim 8,
**characterised in that**,
the conveyor surface (21) is designed at least in regions to be concave or comprises linear and/or arc sections in the troughed region.

10. The ejector unit according to any one of claims 1 through 9,
**characterised in that**,
one or more recesses (21.1, 22) are incorporated in the conveyor surface (21).

11. The ejector unit according to any one of claims 1 through 10,
**characterised in that**,
the at least one screw receptacle (29), turned towards the front side of the ejector (20), runs out into a screw head receptacle (29.1), in which a screw head of the fastening screw (24) can be received at least in regions in a non-rotatable manner.

12. The ejector unit according to one of claims 1 through 11,
**characterised in that**,
one or more integrally moulded reinforcing ribs (27) are arranged on the rear side facing away from the conveyor surface (21).

13. The ejector unit according to one of claims 1 through 12,
**characterised in that**,
the fastening side (25) has a convex fastening section for bearing against a concave receiving section of a carrier (30).

14. The ejector unit according to one of claims 1 through 13,
**characterised in that**,
in the region of the conveyor surface (21) at least one wear protection element is arranged which consists of a more wear-resistant material than that of the conveyor surface (21).

15. The ejector unit according to claim 14,
**characterised in that**,
the wear protection element is formed from a hard material element or a deposition welding.

16. The ejector unit according to one of claims 1 through 15,
**characterised in that**,
the carrier (30) holds the ejector (20) such that the conveyor surface (21) is inclined relative to the machining direction, in particular by an angle (α) of ± 20° about the radial orientation thereof.

17. The ejector unit according to claim 16,
**characterised in that**,
the angle (α) extends counter to the machining direction in the angular range of -5° to -20°.

## Revendications

1. Ensemble éjecteur pour une fraiseuse routière comprenant un éjecteur (20) et un support (30), l'éjecteur présentant une surface de transport (21) et un côté de fixation (25), l'éjecteur (20) pouvant être fixé de manière remplaçable sur le support (30), l'éjecteur (20) pouvant s'appuyer à plat au moyen du côté de fixation (25) sur une surface d'appui (37) du support (30),
l'éjecteur (20) présentant au moins un logement fileté (29),
et l'éjecteur (20) étant relié directement ou indirectement au support (30) au moyen d'une ou plusieurs vis de fixation (24),
**caractérisé en ce que**
l'éjecteur (20) présente une saillie de fixation (26.1, 26.2) et/ou un logement de fixation,
et **en ce que** la saillie de fixation (26.1, 26.2) s'introduit dans un logement de fixation (37.1, 37.2) du support (30) et/ou une saillie de fixation du support (30) s'introduit dans le logement de fixation de l'éjecteur (20).

2. Ensemble éjecteur selon la revendication 1,
**caractérisé en ce que**
l'éjecteur (20) peut être fixé au support (30) dans au moins deux positions de fonctionnement différentes.

3. Ensemble éjecteur selon la revendication 2,
**caractérisé en ce que**
pour changer les positions de fonctionnement l'éjecteur (20) peut être tourné sur 180°.

4. Ensemble éjecteur selon la revendication 2 ou 3,
**caractérisé en ce que**
l'éjecteur (20) et le support (30) forment une interface mécanique qui permet de monter l'éjecteur (20) sur une enveloppe.

5. Ensemble éjecteur selon l'une quelconque des revendications 1 à 4,
**caractérisé en ce que**
l'éjecteur (20) présente un logement de fixation, à savoir une saillie de fixation (20.1),
et **en ce que** l'éjecteur (20) est relié directement ou indirectement au support (30) au moyen d'au moins un élément de fixation, tel que des vis de fixation (24), sur la saillie de fixation (20.1).

6. Ensemble éjecteur selon l'une quelconque des revendications 1 à 5,
**caractérisé en ce que**
le support (30) présente un pied de fixation (31) sur lequel est moulée une partie d'appui (35), et **en ce que** le pied de fixation (31) présente une surface de fixation (33) s'étendant sensiblement dans la direction d'avancement (V).

7. Ensemble éjecteur selon la revendication 6,
**caractérisé en ce que**
le pied de fixation (31) s'étend dans la direction d'avancement (V) et/ou à l'encontre de celle-ci par rapport à la partie d'appui (35).

8. Ensemble éjecteur selon l'une quelconque des revendications 1 à 7,
**caractérisé en ce que**
la surface de transport (21) de l'éjecteur (20) est disposée sensiblement transversalement à la direction d'avancement (V) de l'ensemble éjecteur et est évidée au moins à certains endroits à l'encontre de la direction d'avancement d'outil, en particulier formée en creux à la façon d'une aube.

9. Ensemble éjecteur selon la revendication 8,
**caractérisé en ce que**
la surface de transport (21) est concave au moins à certains endroits ou elle se compose dans la zone évidée de sections linéaires et/ou arquées.

10. Ensemble éjecteur selon l'une quelconque des revendications 1 à 9,
**caractérisé en ce que**
dans la surface de transport (21) sont ménagés un ou plusieurs évidements (21.1, 22).

11. Ensemble éjecteur selon l'une quelconque des revendications 1 à 10,
**caractérisé en ce que**
ledit au moins un logement fileté (29) s'étend tourné vers la face avant de l'éjecteur (20) dans un logement de tête de vis (29.1) dans lequel la tête d'une vis de fixation (24) peut être logée au moins partiellement bloquée en rotation.

12. Ensemble éjecteur selon l'une quelconque des revendications 1 à 11,
**caractérisé en ce que**
sur la face arrière opposée à la surface de transport (21) sont formées une ou plusieurs rainures de renforcement (27).

13. Ensemble éjecteur selon l'une quelconque des revendications 1 à 12,
**caractérisé en ce que**
le côté de fixation (25) présente une section de fixation convexe pour venir en contact avec une section de logement concave d'un support (30).

14. Ensemble éjecteur selon l'une quelconque des revendications 1 à 13,
**caractérisé en ce que**
dans la zone de la surface de transport (21) est disposé au moins un élément de protection contre l'usure qui est constitué d'un matériau résistant à l'usure en tant que surface de transport (21).

15. Ensemble éjecteur selon la revendication 14,
**caractérisé en ce que**
l'élément de protection contre l'usure est constitué d'un élément en matériau dur ou d'un rechargement.

16. Ensemble éjecteur selon l'une quelconque des revendications 1 à 15,
**caractérisé en ce que**
le support (30) maintient l'éjecteur (20) de telle sorte que la surface de transport (21) soit inclinée par rapport au sens d'usinage, en particulier selon un angle (α) de ± 20° autour de son orientation radiale.

17. Ensemble éjecteur selon la revendication 16,
**caractérisé en ce que**
l'angle (α) s'étend négativement à l'encontre du sens d'usinage dans la plage angulaire de -5° à -20°.
